# FASCICULE DE BREVET EUROPEEN

(11) **EP 0 478 397 B1**
(45) Date de publication et mention de la délivrance du brevet: **04.01.1995**
(21) Numéro de dépôt: 91402135.7
(22) Date de dépôt: 30.07.1991
(51) Int. Cl.: B60T 7/12

(54) **Dispositif de freinage automatique pour véhicule**
Selbsttätige Fahrzeugbremsvorrichtung
Automatic vehicle brake device

(30) Priorité: 28.09.1990 FR 9012015
(43) Date de publication de la demande: 01.04.1992
(73) Titulaire: ALLIEDSIGNAL EUROPE SERVICES TECHNIQUES, 93700 Drancy (FR)
(72) Inventeur: Kervagoret, Gilbert AlliedSignal Europe, F-93700 Drancy (FR)
(74) Mandataire: Bentz, Jean-Paul

(56) Documents cités:
- EP-A- 0 230 213
- EP-A- 0 353 125
- US-A- 4 022 306
- US-A- 4 574 908

## Description

La présente invention concerne un dispositif de freinage automatique pour véhicule équipé d'au moins un circuit fluidique reliant un maître cylindre à un circuit utilisateur incluant au moins un moteur de frein et comprenant, en outre, une pompe susceptible de débiter au moteur de frein du fluide sous pression élevée prélevé dans un réservoir sous basse pression.

Un tel dispositif trouve plusieurs applications que l'homme du métier pourra aisément combiner. Par exemple, il peut être utilisé dans un véhicule pourvu d'un système d'anti-blocage des roues pour limiter la pression du fluide dans le moteur de frein à une valeur inférieure ou égale à celle du fluide dans le maître cylindre pendant les séquences de fonctionnement actif du système d'anti-blocage.

Il peut également être utilisé pour commander automatiquement un freinage en réponse à un signal émis par exemple par une balise ou par un radar détectant un obstacle. Il peut également être utilisé pour freiner automatiquement les roues motrices lors de la détection d'un patinage notamment à l'accélération.

Dans tous les cas, pour des raisons de sécurité évidentes, le conducteur du véhicule ainsi équipé doit pouvoir freiner son véhicule même si le dispositif est en mode de fonctionnement automatique.

Le document EP-A-0 230 213 décrit un circuit permettant une commande automatique de freinage en cas de détection d'un obstacle. Toutefois, ce circuit ne permet pas d'assurer l'ensemble des fonctions décrites ci-dessus.

On connaît d'autre part du document EP-A-0 353 125 un dispositif de freinage comportant un circuit principal d'alimentation des freins, une électrovalve disposée sur un circuit auxiliaire de commande et une vanne normalement ouverte disposée sur le circuit principal d'alimentation des freins, l'électrovalve étant susceptible d'alimenter le circuit auxiliaire de commande normalement fermé par la vanne, cette vanne étant commandée par la pression délivrée par l'électrovalve de façon à fermer le circuit principal d'alimentation des freins et ouvrir le circuit auxiliaire.

Dans ce dispositif, l'électrovalve est à deux positions, et elle est disposée en série dans le circuit auxiliaire de commande, entre une pompe alimentant le circuit auxiliaire et les freins. Il en résulte une régulation en tout ou rien de la pression dans les freins.

La présente invention a donc pour but un dispositif permettant au conducteur de freiner son véhicule même si le dispositif est en mode de fonctionnement automatique, un tel fonctionnement fournissant une régulation progressive de la pression dans les freins.

Selon l'invention, le dispositif de freinage automatique comprend, en combinaison :
- une électrovalve proportionnelle formée dans un corps et comprenant une entrée reliée au réservoir, une sortie reliée à l'entrée d'alimentation de la pompe, et une sortie de régulation reliée au circuit utilisateur en aval de la pompe, l'électrovalve fermant, au repos, une communication entre le réservoir et l'entrée d'alimentation de la pompe, et ouvrant, en fonctionnement, cette communication pour réguler la pression dans le circuit utilisateur, et
- un tiroir de comparaison délimitant une première chambre d'extrémité reliée en permanence au maître-cylindre, une seconde chambre d'extrémité reliée en permanence à la sortie de régulation, et une chambre intermédiaire reliée au réservoir et à la sortie de régulation dans une première position du tiroir, et reliée au maître-cylindre et à la sortie de régulation dans une deuxième position du tiroir, le tiroir occupant lesdites première ou seconde positions selon que la pression dans la seconde chambre d'extrémité est supérieure ou inférieure respectivement à la pression dans la première chambre d'extrémité.

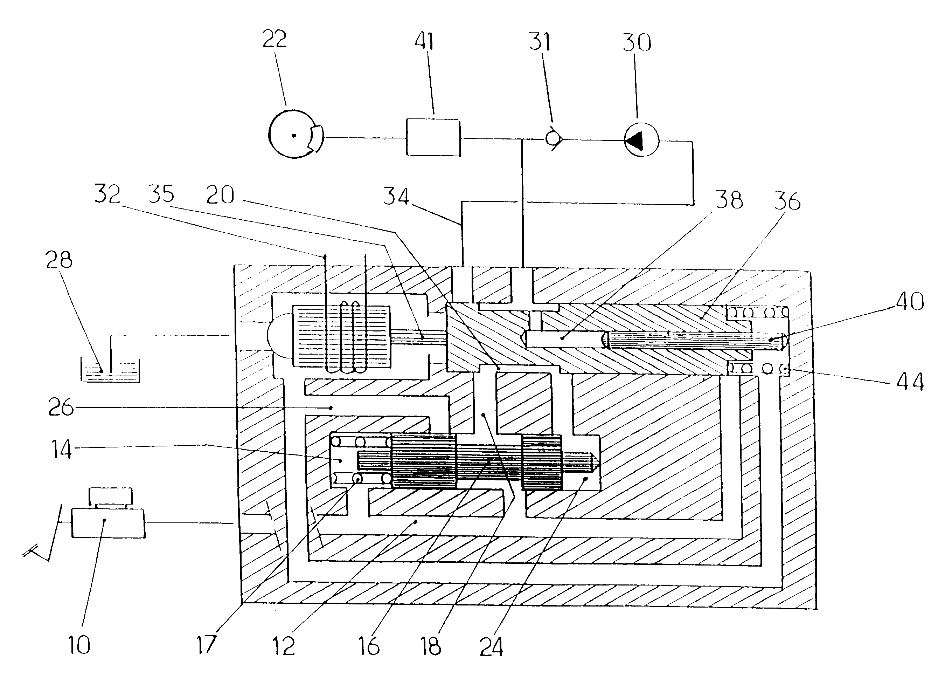

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche de dessin sur laquelle :
- La Figure Unique représente schématiquement en coupe un dispositif de freinage automatique selon l'invention.

En référence maintenant à cette Figure Unique, on reconnaîtra en 10 un maître cylindre connecté à un conduit 12. Ce conduit 12 est ouvert sur une chambre 14 située d'un côté d'un tiroir de comparaison 16 rappelé au repos par un ressort 17 de manière à laisser une communication ouverte entre ce conduit 12 et un conduit 18 menant, à travers la sortie de régulation 20 d'une électrovalve proportionnelle, au moteur de frein 22 par l'intermédiaire d'un dispositif d'antiblocage des roues 41. Le moteur 22 est également connecté à la chambre 24 ménagée de l'autre côté du tiroir de comparaison 16. Lorsque ce tiroir de comparaison 16 se déplace sous l'effet de la différence entre les pressions régnant dans les chambres 14 et 24, il ferme la communication entre les conduits 12 et 18 et ouvre une communication normalement fermée entre les conduits 18 et 26. Ce conduit 26 est relié au réservoir 28 de fluide sous basse pression.

Une pompe 30 est susceptible d'alimenter en fluide sous pression élevée le moteur de frein 22 par l'intermédiaire d'un clapet anti-retour 31. L'entrée d'alimentation de la pompe 30 est reliée au réservoir 28 par l'intermédiaire d'un conduit 34 qui est ferme tant que l'électrovalve n'est pas en fonctionnement.

Sur le schéma, ce conduit est doublement fermé de manière à éviter toute fuite du fluide sous pression élevée vers le réservoir lorsque l'électrovalve n'est pas excitée. Cette double fermeture n'est cependant pas une nécessité. Toutefois, le circuit de freinage normal étant du type hydrostatique il faut une étanchéité absolue entre le maître cylindre 10 et le réservoir 28.

L'électrovalve comprend un solenoïde 32 susceptible de créer un champ magnétique destiné à mouvoir la tige de poussée 35 d'un tiroir 36 rappelé au repos par un ressort 44. Une aiguille 40 immobile par rapport au corps de l'ensemble pénètre dans un alésage ménagé dans ce tiroir 36 de manière à déterminer une chambre de réaction 38. Cette dernière chambre 38 est en permanence en communication avec le circuit utilisateur comprenant le dispositif d'anti-blocage 41 et le moteur de frein 22. Le tiroir 36 assure aussi le fonction d'ouverture/fermeture du conduit 34.

En freinage normal, la pression générée par le maître cylindre se retrouve donc dans le moteur de frein 22 puisque le tiroir 16 reste en position de repos et que l'électrovalve n'est pas excitée. On sait qu'en cas d'imminence d'un blocage de roue, le dispositif d'anti-blocage 41 fonctionne de manière habituelle.

Maintenant en fonctionnement automatique, c'est-à-dire en réponse à un ordre extérieur, aucune pression n'étant générée par le maître cylindre 10, l'activation simultanée de la pompe 30 et de l'électrovalve assure la communication entre l'entrée d'alimentation de la pompe et le réservoir 28. La pression régnant dans le moteur de frein 22, et donc dans la chambre 24 étant bien évidemment supérieure à celle régnant dans le maître cylindre 10, et donc dans la chambre 14, le tiroir de comparaison 16 se meut, obture le conduit 12 et ouvre la communication intermédiaire entre les conduits 18 et 26. L'orifice de régulation de l'électrovalve est donc en communication avec le réservoir 28, ce qui permet à l'électrovalve de réguler de façon contrôlée la pression dans le moteur de frein 22. Le dispositif d'anti-blocage des roues 41 reste en service de manière à éviter tout blocage intempestif des roues.

Si le conducteur pendant ce temps de freinage automatique désire freiner davantage son véhicule, une pression est générée par le maître cylindre 10 dans la chambre 14. Dès que cette pression atteint une valeur voisine de celle régnant dans la chambre 24, le tiroir de comparaison 16 revient dans sa position de repos représentée et le conduit 12 s'ouvre à nouveau vers l'orifice de régulation 20.

Pour tenter de réguler la pression selon la consigne reçue, l'orifice 20 s'ouvre alors davantage ce qui ferme la communication entre l'entrée d'alimentation de la pompe 30 et le réservoir 28. C'est alors la pression engendrée par le maître cylindre 10 qui est appliquée au moteur de frein 22.

Ce dispositif permet donc bien d'assurer en toute sécurité les fonctions mentionnées ci-avant. Notamment, il présente l'avantage, par rapport à beaucoup de dispositifs connus, de permettre un freinage du véhicule en période d'anti-patinage, si le fonctionnement en mode automatique est prévu pour éviter le patinage des roues motrices.

On comprendra que l'homme du métier pourra aisément apporter des modifications à ce dispositif sans sortir du cadre de l'invention tel que défini par les revendications annexées.

## Revendications

1. Dispositif de freinage automatique pour véhicule équipé d'au moins un circuit fluidique reliant un maître cylindre (10) à un circuit utilisateur incluant au moins un moteur de frein et comprenant en outre une pompe (30) susceptible de débiter audit circuit utilisateur par l'intermédiaire d'un clapet anti-retour (31) du fluide sous pression élevée prélevé dans un réservoir (28) sous basse pression, ledit dispositif étant caractérisé en ce qu'il comprend, en combinaison :
- une électrovalve proportionnelle formée dans un corps et comprenant une entrée (26) reliée au réservoir (28), une sortie reliée à l'entrée d'alimentation (34) de la pompe (30), et une sortie de régulation (20) reliée au circuit utilisateur en aval de la pompe (30), l'électrovalve fermant, au repos, une communication entre le réservoir (28) et l'entrée d'alimentation (34) de la pompe (30), et ouvrant, en fonctionnement, cette communication pour réguler la pression dans le circuit utilisateur, et
- un tiroir de comparaison (16) délimitant une première chambre d'extrémité (14) reliée en permanence au maître-cylindre (10), une seconde chambre d'extrémité (24) reliée en permanence à la sortie de régulation (20), et une chambre intermédiaire reliée au réservoir (28) et à la sortie de régulation (20) dans une première position du tiroir (16), et reliée au maître-cylindre (10) et à la sortie de régulation (20) dans une deuxième position du tiroir (16), le tiroir (16) occupant lesdites première ou seconde positions selon que la pression dans la seconde chambre d'extrémité (24) est supérieure ou inférieure respectivement à la pression dans la première chambre d'extrémité (14).

2. Dispositif selon la revendication 1, caractérisé en ce que l'électrovalve comporte un tiroir (36) dans lequel est ménagée une chambre de réaction (38) connecté en permanence au circuit utilisateur.

## Claims

1. Automatic braking device for a vehicle equipped with at least one fluid circuit connecting a master cylinder (10) to an application circuit including at least one brake motor and comprising in addition a pump (30) capable of supplying to said application circuit via a non-return valve (31) fluid under high pressure taken from a low pressure reservoir (28), said device being characterized in that it comprises, in combination:
- a proportional electrovalve formed within a body and comprising an entrance (26) connected to the reservoir (28), an outlet connected to the feed entrance (34) of the pump (30) and a regulating outlet (20) connected to the application circuit downstream of the pump (30), the electrovalve, at rest, closing a communication between the reservoir (28) and the feed entrance of said pump (30) and when operating, opening this communication in order to regulate the pressure of the fluid in the application circuit, and
- a comparison slide valve (16) delimiting a first end chamber (14) connected permanently to the master cylinder (10), a second end chamber (24) connected permanently to the regulating outlet (20), and an intermediate chamber connected to the reservoir (28) and to the regulating outlet (20) in a first position of the slide valve (16), and connected to the master cylinder (10) and to the regulating outlet (20) in a second position of the slide valve (16), the slide valve (16) occupying said first or second positions, depending on whether the pressure in the second end chamber (24) is respectively higher or lower than the pressure in the first end chamber (14).

2. Device according to Claim 1, characterized in that the electrovalve possesses a slide valve (36) in which a reaction chamber (38) connected permanently to said application circuit is provided.

## Patentansprüche

1. Automatische Bremsvorrichtung für ein Fahrzeug, das mit wenigstens einem Fluidkreis ausgerüstetet ist, der einen Hauptzylinder (10) mit einem Verbraucherkreis verbindet, der wenigstens eine Bremsbetätigungsvorrichtung enthält und außerdem eine Pumpe (30) aufweist, die in der Lage ist, den Verbraucherkreis über ein Rückschlagventil (31) mit Hochdruckfluid zu versorgen, welches einem Niederdruckvorratsbehälter (28) entnommen wurde, wobei die Vorrichtung dadurch gekennzeichnet ist, daß sie in Kombination enthält:
- ein Proportionalelektroventil, das in einem Körper gebildet ist und einen mit dem Vorratsbehälter (28) verbundenen Eingang, einen mit dem Versorgungseingang (34) der Pumpe (30) verbundenen Ausgang sowie einen Regelausgang (20) aufweist, der mit dem Verbraucherkreis hinter der Pumpe (30) verbunden ist, wobei das Elektroventil in der Ruhestellung eine Verbindung zwischen dem Vorratsbehälter (28) und dem Versorgungseingang (34) der Pumpe (30) schließt und in der Arbeitsstellung diese Verbindung öffnet, um den Druck in dem Verbraucherkreis zu regeln, und
- einen Vergleichsschieber (16), der eine permanent mit dem Hauptzylinder (10) verbundene erste Endkammer (14), eine permanent mit dem Regelausgang (20) verbundene zweite Endkammer (24) sowie eine Mittelkammer abgrenzt, die in einer ersten Stellung des Schiebers (16) mit dem Vorratsbehälter (28) und dem Regelausgang (20) und in einer zweiten Stellung des Schiebers (16) mit dem Hauptzylinder (10) und dem Regelausgang (20) verbunden ist, wobei der Schieber (16) die erste oder zweite Stellung in Abhängigkeit davon einnimmt, ob der Druck in der zweiten Endkammer (24) größer oder kleiner als der Druck in der ersten Endkammer (14) ist.

2. Vorrichtung nach Anspruch 1, dadurch gekennzeichnet, daß das Elektroventil einen Schieber (36) aufweist, in dem eine Reaktionskammer (38) ausgebildet ist, die permanent mit dem Verbraucherkreis verbunden ist.
